# EUROPÄISCHE PATENTSCHRIFT

(11) **EP 3 586 168 B1**
(45) Veröffentlichungstag und Bekanntmachung des Hinweises auf die Patenterteilung: **01.06.2022**
(21) Anmeldenummer: 18701467.5
(22) Anmeldetag: 24.01.2018
(51) Int. Cl.: G01S 19/07

(54) **VERFAHREN ZUR BESTIMMUNG EINES ADAPTIVEN MODELLS EINER ELEKTRONENDICHTEVERTEILUNG**
METHOD FOR DETERMINING AN ADAPTIVE MODEL OF AN ELECTRON DENSITY DISTRIBUTION
PROCÉDÉ DE DÉTERMINATION D'UN MODÈLE ADAPTATIF D'UNE DISTRIBUTION DE DENSITÉ ÉLECTRONIQUE

(30) Priorität: 23.02.2017 DE 102017202901
(43) Veröffentlichungstag der Anmeldung: 01.01.2020
(73) Patentinhaber: Robert Bosch GmbH, 70442 Stuttgart (DE)
(72) Erfinder: LIMBERGER, Marco, 71638 Ludwigsburg (DE); LANGER, Markus, 71679 Asperg (DE)
(86) Internationale Anmeldenummer: PCT/EP2018/051676
(87) Internationale Veröffentlichungsnummer: WO 2018/153601

(56) Entgegenhaltungen:
- LIANG WENJING ET AL: "Multi-scale ionosphere model with data-adapted spatial resolution", 2014 XXXITH URSI GENERAL ASSEMBLY AND SCIENTIFIC SYMPOSIUM (URSI GASS), IEEE, 16. August 2014 (2014-08-16), Seite 1, XP032662856, DOI: 10.1109/URSIGASS.2014.6929837 [gefunden am 2014-10-17]
- DENISE DETTMERING ET AL: "Combination of different space-geodetic observations for regional ionosphere modeling", JOURNAL OF GEODESY ; CONTINUATION OF BULLETIN GÉODÉSIQUE AND MANUSCRIPTA GEODAETICA, SPRINGER, BERLIN, DE, Bd. 85, Nr. 12, 10. November 2011 (2011-11-10), Seiten 989-998, XP019975338, ISSN: 1432-1394, DOI: 10.1007/S00190-010-0423-1
- ZEILHOFER C ET AL: "Regional 4-D modeling of the ionospheric electron density from satellite data and IRI", ADVANCES IN SPACE RESEARCH, ELSEVIER, AMSTERDAM, NL, Bd. 43, Nr. 11, 2. Juni 2009 (2009-06-02), Seiten 1669-1675, XP026108067, ISSN: 0273-1177, DOI: 10.1016/J.ASR.2008.09.033 [gefunden am 2009-02-13]
- COLOMBO OSCAR L ET AL: "Extending Wide Area and Virtual Reference Station Networks Far Into the Sea With GPS Buoys", GNSS 2005 - PROCEEDINGS OF THE 18TH INTERNATIONAL TECHNICAL MEETING OF THE SATELLITE DIVISION OF THE INSTITUTE OF NAVIGATION (ION GNSS 2005), THE INSTITUTE OF NAVIGATION, 8551 RIXLEW LANE SUITE 360 MANASSAS, VA 20109, USA, 16 September 2005 (2005-09-16), pages 560-572, XP056009605,

## Beschreibung

### Stand der Technik

Die Erfindung betrifft ein Verfahren zur Bestimmung eines adaptiven Modells einer Elektronendichteverteilung in der Atmosphäre, insbesondere in der sogenannten Ionosphäre.

Als Ionosphäre wird ein Bereich der Hochatmosphäre beschrieben, der sich ungefähr zwischen 50 km und 1000 km Höhe erstreckt und oberhalb in die Plasmasphäre übergeht. Die Ionosphäre zeichnet sich durch eine erhöhte Konzentration an geladenen Partikeln aus, die durch lonisationsprozesse in Abhängigkeit von der solaren Einstrahlung entsteht. Abhängig von der Frequenz und Stärke der Ionisation werden elektromagnetische Signale in der Ionosphäre gebrochen, was zu Laufzeitverzögerungen führen kann. Davon betroffen sind diverse Anwendungsgebiete wie zum Beispiel die satellitengestützte Positionierung und Navigation. In den Code- und Trägerphasenbeobachtungen von Globalen Satellitennavigationssystemen (GNSS) wie dem amerikanischen GPS oder europäischen Galileo kann die Laufzeitverzögerung, abhängig vom Zustand der Ionosphäre, zu Streckenfehlern im zweistelligen Meter-Bereich führen. Insbesondere in sicherheitskritischen Anwendungen ist die genaue Kenntnis der Ionosphäre zur Berücksichtigung des Einflusses von enormer Wichtigkeit. Bei der Verwendung von teuren, geodätischen Zweifrequenzempfängern können Signalkombinationen angewendet werden um den lonosphäreneinfluss erster Ordnung zu eliminieren. Wesentlich preisgünstigere Einfrequenzempfänger müssen zwangsläufig auf Atmosphärenmodelle zurückgreifen, um die Signale zu korrigieren und Genauigkeiten < 1 m zu erreichen.

Für entsprechende Atmosphärenmodelle, die zur Fehlerkorrektur in Einfrequenzempfängern verwendet werden, sind die lonosphärenprodukte der Analysezentren des Internationalen GNSS Service (IGS) bekannt, die aus Beobachtungen eines globalen Netzwerkes mit ortsfesten GNSS Referenzstationen die integrierte Elektronendichte, den sog. Total Electron Content (TEC), in Abhängigkeit der geografischen Länge, geografischen Breite und Zeit berechnen und bereitstellen. TEC Werte dienen GNSS Nutzern zur Korrektur des lonosphäreneinflusses in den Messungen. Demnach basieren die bekannten Atmosphärenmodelle für Einfrequenzempfänger auf ort- und zeitabhängigen TEC Werten, die von ortsfesten Referenzstationen bestimmt werden. Für zwischen den Referenzstationen liegende geodätische Positionen werden die ort- und zeitabhängigen TEC Werten interpoliert.

Die Parametrisierung und Interpolation des TEC erfolgt meist mit Hilfe global definierter Basisfunktionen, z.B. Kugelflächenfunktionen (KFF) oder Voxeln, die eine homogene Datenverteilung und -qualität erwarten. Grad und Ordnung der KFF bzw. Voxelgrößen und damit das Auflösungsvermögen des Modells wird tendenziell durch die Stationsverteilung definiert. Zusätzlich werden feste Stützpunkte angenommen. Aufgrund der inhomogenen Stationsverteilung degradiert folglich die Auflösung des TEC durch Modellglättung während Detailinformationen in Gebieten dichter Beobachtungsverteilung verloren gehen. Dem GNSS Nutzer werden globale, stark geglättete Gitterwerte mit einer Auflösung von 2.5° (-250 km) Breite x 5° (-500 km) Länge x 2 h bereitstellt.

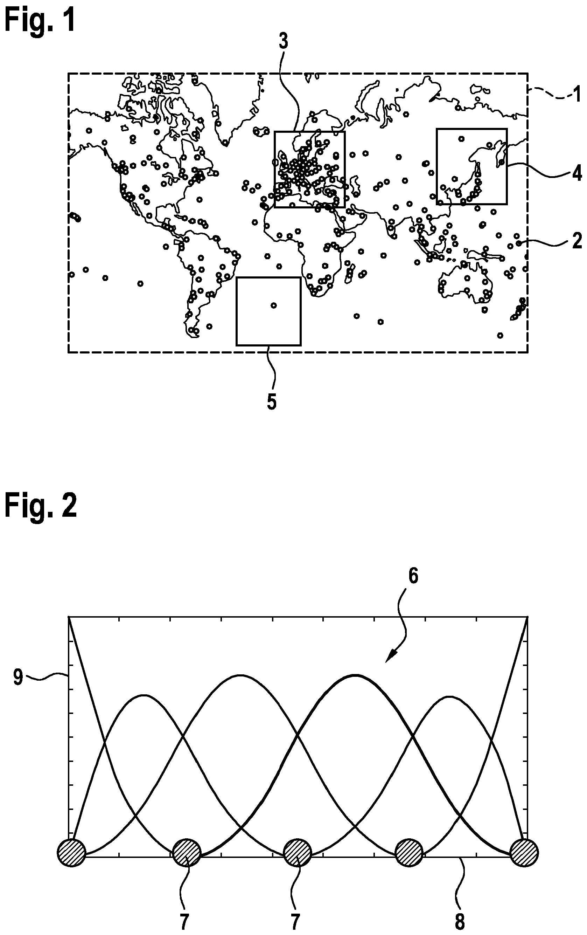

Das IGS Netzwerk ist exemplarisch in Fig. 1 dargestellt. Die eingetragenen Punkte kennzeichnen die einzelnen Referenzstationen. Die inhomogene Stationsverteilung gekoppelt mit deutlichen Datenlücken sind offensichtlich und lediglich über Europa kann hier von einem engmaschigen Netzwerk die Rede sein. Zusätzlich ist die Wahl des Equipments (z.B. GNSS Receiver, Antenne, Aufstellort) typischerweise in der Verantwortung des Stationsbetreibers und die Datenqualität sehr inhomogen. Demnach ergeben sich zum aktuellen Zeitpunkt folgende Defizite, die einen direkten Einfluss auf die Qualität der lonosphärenprodukte haben:
- Inhomogene Stationsverteilung,
- Inhomogene Datenqualität,
- Verwendung global definierter, homogen verteilter Basisfunktionen trotz inhomogener Datenbasis,
- Signifikanter Informationsverlust durch Modellglättung in Gebieten dichter Stationsverteilung (z.B. Europa),
- Gebiete ohne Stationsabdeckung, d.h. keine Atmosphäreninformation verfügbar, müssen mit sehr grober Modellauflösung überbrückt werden.

Das IGS Netzwerk ist hier nur exemplarisch gewählt. Die gelisteten Defizite sind ebenfalls bei anderen GNSS Bodenstationsnetzwerken zu finden.

Aus LIANG WENJING ET AL, "Multi-scale ionosphere model with data-adapted spatial resolution", 2014 XXXITH URSI GENERAL ASSEMBLY AND SCIENTIFIC SYMPOSIUM (URSI GASS), IEEE, (20140816), Seite 1, ist ein Verfahren zur Bestimmung eines Modells einer Elektronendichteverteilung in der Erdatmosphäre bekannt.

Aus Denise Dettmering et al: "Combination of different space-geodetic observations for regional ionosphere modeling", Journal of Geodesy, Bd. 85, Nr. 12, 10. November 2011, Seiten 989-998, ist eine Kombination verschiedener weltraumgeodätischer Beobachtungen für die regionale Modellierung der Ionosphäre bekannt.

Aus Colombo Oscar et al: "Extending wide area and virtual reference station networks far into the sea with GPS buoys", Proceedings of the 18th International technical meeting of the satellite division of the Institute of Navigation (ION GNSS 2005), 16. September 2005, Seiten 560-572, ist eine Ausdehnung von weiträumigen und virtuellen Referenzstationsnetzen weit ins Meer hinein mit GPS-Bojen bekannt.

### Offenbarung der Erfindung

Hier vorgeschlagen wird ein Verfahren zur Bestimmung eines adaptiven Modells einer Elektronendichteverteilung in der Erdatmosphäre gemäß dem Anspruch 1. Das Modell wird dazu genutzt, Laufzeitmessungen von Signalen, die von Erdsatelliten ausgesendet werden, für Positionsbestimmungen mit Signalemfängern zu korrigieren. Das Verfahren weist unter anderem folgende Schritte auf:
a) Ermitteln von lokalen Elektronendichtedaten von Bereitstellungsstellen,
b) Bestimmen einer lokalen Auflösungsgenauigkeit in Abhängigkeit einer lokalen Dichte von Bereitstellungsstellen,
c) Bestimmen von lokalisierenden Basisfunktionen zur Interpolation der in Schritt a) ermittelten Elektronendichtedaten in Abhängigkeit der in Schritt b) bestimmten Auflösungsgenauigkeit,
d) Erstellen des Modells der Elektronendichteverteilung mit den in Schritt a) ermittelten Daten und den in Schritt c) ermittelten Funktionen.

Die (lokale) Elektronendichte in der Ionosphäre steht in einem engen Zusammenhang zu einer (lokalen) Ionendichte in der Ionosphäre. Daher wird zur Beschreibung der Ionosphäre je nach Zusammenhang auf die Elektronendichte oder auf die Ionendichte zurück gegriffen.

In Schritt a) erfolgt ein Ermitteln von lokalen Elektronendichtedaten von Bereitstellungsstellen. Bevorzugt werden hierbei die lokalen Elektronendichtedaten, die von den Bereitstellungsstellen ermittelt, ausgewertet und/oder bereitgestellt werden, von einer Auswertevorrichtung in einem Datenzentrum, in dem das Modell der Elektronendichteverteilung gebildet wird, empfangen und ausgewertet. Hierzu können die Elektronendichtedaten dem Datenzentrum beispielsweise über eine Kabelverbindung und (stationäre Bereitstellungsstellen), eine Funkverbindung und/oder eine Satellitenverbindung übermittelt werden.

Bei den Daten zur Elektronendichteverteilung kann es sich um insbesondere orts- und zeitabhängige TEC-Werte und/oder um insbesondere orts- und zeitabhängige Parameter handeln, die einen direkten Rückschluss auf TEC-Werte zulassen. Besonders bevorzugt handelt es sich bei den Elektronendichtedaten um insbesondere ort- und zeitabhängige Funktionsparameter, mit denen ein insbesondere vierdimensionales Modell einer Elektronendichteverteilung gebildet werden kann, insbesondere, wenn die Funktionsparameter in eine Verteilungsfunktion eingesetzt werden. Wird als Verteilungsfunktion beispielsweise die sogenannte Chapman-Funktion verwendet, so können die ort- und zeitabhängigen Funktionsparameter zumindest folgende Parameter umfassen:
- maximale Elektronendichte entlang der Höhe,
- die Höhe auf der diese maximale Elektronendichte auftritt, und
- die zugehörige Skalenhöhe.

Nach einer vorteilhaften Ausgestaltung wird vorgeschlagen, dass die Bereitstellungsstellen jeweils mindestens einen Zweifrequenz-Signalempfänger aufweisen. Bevorzugt ermitteln die Zweifrequenz-Signalempfänger Parameter, die zur Beschreibung der Elektronendichte entlang eines Signallaufwegs von einem Satelliten zu einem Zweifrequenz-Signalempfänger repräsentativ sind, wie etwa insbesondere zeitabhängige TEC-Werte im Bereich des jeweiligen Zweifrequenz-Signalempfängers. Darüber hinaus können die Bereitstellungsstellen Auswerte- und Sendeeinheiten aufweisen, mit denen die ermittelten Parameter ausgewertet und an ein Datenzentrum weitergeleitet werden können, in dem das Modell der Elektronendichteverteilung gebildet wird.

Erfindungsgemäß werden in Schritt a) lokale Elektronendichtedaten (Elektronendichteverteilungen) von stationären Bereitstellungsstellen und von entlang eines Pfads auf der Erdoberfläche bewegbaren bzw. bewegten Bereitstellungsstellen ermittelt. Bewegbare Bereitstellungsstellen zeichnen sich insbesondere dadurch aus, dass sie, ohne Demontage der sie bildenden Komponenten, von einer geodätischen Position zu einer anderen geodätischen Position bewegt werden können. Als stationäre Bereitstellungsstellen können beispielsweise die ortsfesten GNSS Permanent-Stationen in Referenznetzwerken wie dem IGS Netzwerk verwendet werden.

Erfindungsgemäß sind die bewegbaren Bereitstellungsstellen in oder an Kraft-Fahrzeugen angeordnet. Die Verwendung fahrzeugbasierter Bereitstellungsstellen, insbesondere in Kombination mit stationären Bereitstellungsstellen, zur (gemeinschaftlichen) Berechnung von Korrekturen für lonosphärenfehler bei der Positionsbestimmung, bietet den besonderen Vorteil, dass eine ausreichende zeitliche und räumliche Abdeckung erzielt werden kann, die allein mit stationären Bereitstellungsstellen nicht erreichbar ist. Durch die Bewegung der Fahrzeuge ändert sich die Verteilung der Bereitstellungsstellen ständig, was durch das mittels des Verfahrens bestimmte adaptive Modell und erfindungsgemäß durch eine dynamische Neuverteilung der Basisfunktionen berücksichtigt wird.

In Schritt b) erfolgt ein Bestimmen einer lokalen Auflösungsgenauigkeit in Abhängigkeit einer lokalen Dichte von Bereitstellungsstellen. Beispielsweise kann die Auswertevorrichtung des Datenzentrums die geodätischen Positionen der Bereitstellungsstellen auswerten, um hieraus eine lokale Dichte von Bereitstellungsstellen und/oder eine lokalen Auflösungsgenauigkeit zu ermitteln bzw. zu berechnen.

In Schritt c) erfolgt ein Bestimmen von Funktionen zur Interpolation der in Schritt a) ermittelten Elektronendichtedaten in Abhängigkeit der in Schritt b) bestimmten Auflösungsgenauigkeit. Dies ermöglicht in besonders vorteilhafter Weise, dass mit der vorgestellten Lösung ein adaptives Modell bzw. ein Modell, das insbesondere kontinuierlich an die vorliegende Beobachtungssituation angepasst wird, bereitgestellt wird.

Erfindungsgemäß sind die in Schritt c) bestimmten Funktionen lokalisierende Basisfunktionen. Als lokalisierende Basisfunktionen können beispielsweise B-Splines und/oder Voxel (Gitterpunkte in einem dreidimensionalen Gitter als Knotenpunkte) verwendet werden. Lokalisierende Basisfunktionen zeichnen sich insbesondere dadurch aus, dass deren Stützpunkte und/oder Überdeckungsbereiche adaptiv an die räumliche und zeitliche Beobachtungsverteilung anpassbar sind. Bevorzugt wird in Schritt c) die Verteilung von Stützpunkten der Basisfunktionen, insbesondere von B-Spline Stützpunkten und/oder Voxelgrößen, in Abhängigkeit der Auflösungsgenauigkeit bzw. der Quantität und/oder Qualität der Beobachtungen bestimmt.

Vorzugsweise werden die Funktionen in Schritt c) derart bestimmt, dass in einem oder mehreren (räumlichen) Gebiet(en) mit dichter Beobachtungsverteilung bzw. hoher Auflösungsgenauigkeit (jeweils) eine adaptive Regionalmodellierung erfolgt. Lokalisierende Basisfunktionen sind besonders geeignet für die adaptive Regionalmodellierung. In dem Gebiet mit dichter Beobachtungsverteilung befinden sich (räumlich konzentriert) stationäre Bereitstellungsstellen und/oder bewegbare Bereitstellungsstellen mit Distanzen (sog. Basislinien) zwischen Beobachtungsstellen im zweistelligen km Bereich. Für die adaptive Regionalmodellierung in diesem Gebiet kann jede der stationären Bereitstellungsstellen und/oder jede der bewegbaren Bereitstellungsstellen für die Bestimmung der Stützpunkte der Basisfunktion(en) dienen, sodass in vorteilhafter Weise aufgrund der dichten und adaptiven Stützpunktverteilung der Basisfunktion(en) eine modellierungsbedingte Glättung der Elektronendichteverteilung reduziert werden kann. Somit können Gebiete mit dichter Beobachtungsabdeckung hochauflösend modelliert werden, wodurch ein hoher Detailgrad erreichbar ist.

In einem oder mehreren Gebiet(en) mit dünner Beobachtungsverteilung bzw. geringer Auflösungsgenauigkeit kann ebenfalls eine adaptive Regionalmodellierung erfolgen. In dem Gebiet mit dünner Beobachtungsverteilung befinden sich wenige Bereitstellungsstellen im Vergleich zu Gebieten mit dichter Beobachtungsverteilung. Die Dichte an Bereitstellungstellen bzw. der Abstand zwischen einzelnen Bereitstellungstellen liegt in Gebieten mit dünner Beobachtungsverteilung im Bereich von mehreren 100 km. In dem Gebiet mit dünner Beobachtungsverteilung können bewegbare Bereitstellungsstellen ganz besonders zur Verdichtung der Beobachtungsverteilung beitragen. Für die adaptive Regionalmodellierung in dem Gebiet mit dünner Beobachtungsverteilung können die bewegbaren Bereitstellungsstellen zusätzlich zu den stationären Bereitstellungsstellen als Berechnungsgrundlage für die Bestimmung der Stützpunkte der Basisfunktion(en) dienen. Bevorzugt werden in dem Gebiet mit dünner Beobachtungsverteilung die Basisfunktion(en) so angepasst, dass Datenlücken überbrückt und der reduzierte Informationsgehalt bestmöglich ausgenutzt werden kann.

In einem oder mehreren Gebiet(en) mit Datenlücken kann ein globales Hintergrundmodell zur Modellierung der Elektronendichteverteilung genutzt werden. Dies bedeutet mit anderen Worten insbesondere, dass bei der vorgestellten Lösung eine oder mehrere adaptive Regionalmodellierung(en) in ein (möglicherweise nicht-adaptives) Hintergrundmodell eingebettet werden kann bzw. können. In dem Gebiet mit Datenlücken befinden sich keine oder nur sehr wenige stationäre Bereitstellungsstellen. Darüber hinaus befinden sich in dem Gebiet mit Datenlücken keine oder nur sehr wenige bewegbare Bereitstellungsstellen. Eine genaue quantitative Bewertung einer Datenlücke hängt von der Applikation des Modells ab. Zusätzlich zu dem globalen Hintergrundmodell können weitere satellitengestützte Beobachtungsverfahren, wie z. B. Radar-Altimetrie zur Modellierung der lonenverteilung in dem Gebiet mit Datenlücken genutzt werden.

Insbesondere in Übergangsbereichen zwischen Gebieten mit dünner Beobachtungsverteilung und Gebieten mit dichter Beobachtungsverteilung können Glättungsfunktionen verwendet werden, um die erhöhte Genauigkeit durch die dichte Beobachtungsverteilung möglichst weit in Bereichen dünner Beobachtungsverteilung nutzen zu können.

Das mittels des Verfahrens bestimmte Modell der Elektronendichteverteilung kann damit auf einer sogenannten "Patch"-Methode basieren, bei der ein globales Hintergrundmodell mit regionalen Verdichtungen bzw. Regionalmodellierungen kombiniert wird. Das globale Hintergrundmodell kann beispielsweise Kugelflächenfunktionen und/ oder Voxelansätze verwenden, um eine insbesondere geglättete, interpolierte globale Elektronendichteverteilung zu beschreiben.

Bevorzugt sind die in Schritt c) bestimmten Funktionen lokalisierende, polynomiale B-Splines. Bei diesen Funktionen kann der Gültigkeitsbereich und damit der Lokalisierungsbereich mit der Verteilung der Stützpunkte variiert werden. Alternativ oder zusätzlich kann ein Voxel-Ansatz gewählt werden. In diesem Fall können die Voxel-Ecken als Stützpunkte interpretiert werden, sodass die Größe und Anzahl der Voxel je nach Beobachtungsgrundlage variiert werden kann.

In Schritt d) erfolgt ein Erstellen des Modells der Elektronendichteverteilung mit den in Schritt a) ermittelten Daten und den in Schritt c) ermittelten Funktionen. Zudem kann zum Erstellen des Modells mindestens eine Verteilungsfunktion, insbesondere eine sogenannte Chapman- oder Epstein-Funktion verwendet werden, mit der eine Schätzung der Verteilung der Elektronendichte in Abhängigkeit der Höhe möglich ist. Bevorzugt wird in Schritt d) ein vierdimensionales Elektronendichtemodell und/oder ein Modell zum zeitabhängigen Beschreiben der Elektronendichteverteilung in allen drei Raumrichtungen erstellt.

Nach einer weiteren vorteilhaften Ausgestaltung wird vorgeschlagen, dass mit dem Modell der Elektronendichteverteilung Korrekturdaten ermittelt werden, die einer Mehrzahl von Einfrequenz- und Zweifrequenz-Signalempfängern bereitgestellt werden. Mittels der Korrekturdaten können in dem jeweiligen Einfrequenz-Signalempfänger hinterlegte Ionosphärenmodelle korrigiert und/oder aktualisiert werden. In Zweifrequenz-Empfängern können die Ionosphärenkorrekturen z.B. für verbesserte Integritätskonzepte oder ein schnelleres Lösen der Phasenmehrdeutigkeiten und damit dem Erzielen kürzerer Konvergenzzeiten genutzt werden. Entsprechende Signalempfänger können beispielsweise an oder in (Kraft-) Fahrzeugen, Schiffen, Bojen, landwirtschaftlichen Geräten oder Maschinen, tragbaren GNSS-Empfängern, Mobiltelefonen oder anderen Elektronikartikeln angeordnet sein.

Hier auch beschrieben werden sollen eine Vorrichtung zur Durchführung des beschriebenen erfindungsgemäßen Verfahrens sowie ein entsprechendes Computerprogramm und ein maschinenlesbares Speichermedium auf dem dieses Computerprogramm gespeichert ist. Eine Vorrichtung zur Durchführung des beschriebenen Verfahrens ist üblicherweise in einem Rechenzentrum oder einer ähnlichen Struktur implementiert. Hier werden lokale Elektronendichtedaten nach dem beschriebenen Verfahren empfangen und verarbeitet.

Die hier vorgestellte Lösung sowie deren technisches Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und/oder Erkenntnissen aus anderen Figuren und/oder der vorliegenden Beschreibung zu kombinieren. Es zeigen schematisch:
- Fig. 1:: eine Kartenansicht mit Stationsverteilung des IGS Netzwerks, und
- Fig. 2:: eine Darstellung polynomialer B-Splines, die bei der hier vorgestellten Lösung verwendet werden können.

Fig. 1 zeigt schematisch eine Kartenansicht 1, in der die Stationsverteilung des IGS Netzwerks veranschaulicht ist. Das IGS Netzwerk wird hier beispielhaft vorgestellt, da dessen Stationen 2 im Zusammenhang mit der hier vorgestellten Lösung als stationäre Bereitstellungsstellen dienen können, von denen Ionenverteilungsdaten ermittelt werden können. In Fig. 1 sind unterschiedliche Beobachtungsszenarien hervorgehoben, nämlich Gebiete mit dichter Beobachtungsverteilung 3, Gebiete mit dünner Beobachtungsverteilung 4 sowie Gebiete mit größeren Datenlücken 5.

Fig. 2 zeigt schematisch eine Darstellung polynomialer B-splines 6, die bei der hier vorgestellten Lösung zur Interpolation der ermittelten Elektronendichtedaten in Abhängigkeit der bestimmten Auflösungsgenauigkeit verwendet werden können. Fig. 2 zeigt beispielhaft lokalisierende polynomiale B-Splines mit homogen verteilten Stützpunkten 7. Die Stützpunkte 7 können im Zusammenhang mit der hier vorgestellten Lösung durch die stationären Bereitstellungsstellen und/oder durch die bewegbaren Bereitstellungsstellen gebildet werden.

In Fig. 2 sind die geografische Breite 8 auf der Abszisse und B-Spline-Werte 9 auf der Ordinate aufgetragen. Gemäß der Darstellung nach Fig. 2 wurden beispielhaft fünf Stützpunkte 7 in einem Gebiet von -60° bis +30° geografischer Breite 8 homogen verteilt angeordnet. Die Gültigkeitsbereich der einzelnen Funktionen bzw. Kurven und damit der Lokalisierungsbereich variiert mit der Verteilung der Stützpunkte 7. Im Zusammenhang mit der hier vorgestellten Lösung, die ein adaptives Modell der lonenverteilung in der Erdatmosphäre bereitstellt, kann die Anzahl und Position der Stützpunkte 7 nun so variiert werden, dass in Gebieten mit dichter Beobachtungsabdeckung die Stützpunktanzahl erhöht und in Gebietet mit wenig Beobachtungen verringert wird. So kann in Gebieten mit dichter Beobachtungsabdeckung ein enger Lokalisierungsbereich sowie ein erhöhtes Auflösungsvermögen und in Gebieten mit wenig Beobachtungen ein weiter Lokalisierungsbereich und ein reduziertes Auflösungsvermögen bzw. eine erhöhte Glättung eingestellt werden.

Die B-Splines 6 sind lokalisierend, d. h. ungleich Null nur in einem finiten Intervall. Die Stützpunkte 7 der B-Splines 6 können bei der vorgestellten Lösung kontinuierlich an die vorliegende Beobachtungssituation bzw. an die aktuellen (geodätischen) Positionen der stationäre Bereitstellungsstellen und/oder der bewegbaren Bereitstellungsstellen angepasst werden. Durch die Interpolation an den Gebietsrändern und den finiten Unterstützungsbereich eignen sich polynomiale B-Splines hervorragend zur regionalen Modellierung, die im Zusammenhang mit der vorgestellten Lösung auf Basis der lokalen Elektronendichteverteilung erfolgt.

Die vorgestellte Lösung erlaubt insbesondere folgende Vorteile:
- Eine erhöhte Genauigkeit bei der Positionsbestimmung, insbesondere durch eine Reduzierung der modellierungsbedingten Glättung in Gebieten mit hoher Stützpunktdichte.
- GNSS Nutzer, insbesondere solche, die nur einen Einfrequenz-Signalempfänger haben, profitieren von verbesserten Genauigkeiten der Ionosphärenparameter durch adaptive räumliche und zeitliche Auflösungen.
- Durch den erhöhten Auflösungsgrad des Modells lassen sich neben der ionosphärischen Klimatologie, d. h. periodische Effekte wie Variation der Ionosphärenaktivität mit dem solaren 11-Jahres Zyklus, jährliche und saisonale Variationen, tageszeitliche Variation auch hochdynamische, irreguläre Phänomene wie (Medium and Large Scale) Traveling lonospheric Disturbances (TIDs, MSTIDs, LSTIDs), Sudden lonospheric Disturbances (SIDs), Spread F-Layer, sproadische E-Layer, Ionosphärenstürme und/oder Scintillationen erfassen. Derartige Effekte gehen in aktuell verfügbaren Ionosphärenprodukten durch deren starres Auflösungsvermögen und den damit verbundenen Glättungsgrad verloren oder werden in Gebieten mit spärlicher Stationsabdeckung nicht erfasst.

Der (adaptive) Modellansatz wird hier im Rahmen der lonosphärenmodellierung beschrieben, lässt sich aber in vielen Anwendungsgebieten adaptieren, z. B. zur Modellierung der Troposphäre mit GNSS Beobachtungen, Nutzung von Magnetometer-Messungen in Fahrzeugen zur Modellierung des Magnetfeldes oder Modellierung des Erdschwerefeldes.

## Patentansprüche

1. Verfahren zur Bestimmung eines adaptiven Modells einer Elektronenverteilung in der Erdatmosphäre, welche dazu genutzt wird, Laufzeitmessungen von Signalen, die von Erdsatelliten ausgesendet werden, für Positionsbestimmungen mit Signalempfängern zu korrigieren, aufweisend zumindest folgende Schritte:
a) Ermitteln von lokalen Elektronendichtedaten von Bereitstellungsstellen,
b) Bestimmen einer lokalen Auflösungsgenauigkeit in Abhängigkeit einer lokalen Dichte von Bereitstellungsstellen,
c) Bestimmen von lokalisierenden Basisfunktionen zur Interpolation der in Schritt a) ermittelten Elektronendichteverteilung in Abhängigkeit der in Schritt b) bestimmten Auflösungsgenauigkeit,
d) Erstellen des Modells der Elektronendichteverteilung mit den in Schritt a) ermittelten Daten und den in Schritt c) ermittelten Funktionen;
wobei in Schritt a) lokale Elektronendichtedaten von stationären Bereitstellungsstellen und von entlang eines Pfads auf der Erdoberfläche bewegbaren Bereitstellungsstellen ermittelt werden, **dadurch gekennzeichnet, dass** die bewegbaren Bereitstellungsstellen in oder an Kraft-Fahrzeugen angeordnet sind und dass durch das mittels des Verfahrens bestimmte adaptive Modell, durch eine dynamische Neuverteilung der Basisfunktionen eine sich durch die Bewegung der Kraft-Fahrzeuge ständig ändernde Verteilung der Bereitstellungsstellen berücksichtigt wird.

2. Verfahren nach Anspruch 1, wobei die Bereitstellungsstellen jeweils mindestens einen Zweifrequenz-Signalempfänger aufweisen.

3. Verfahren nach einem der vorhergehenden Ansprüche, wobei mit dem Modell der Elektronendichteverteilung Korrekturdaten ermittelt werden, die einer Mehrzahl von GNSS-Signalempfängern bereitgestellt werden.

4. Vorrichtung zur Durchführung eines Verfahrens gemäß einem der vorhergehenden Ansprüche zur Bestimmung eines Modells einer Elektronenverteilung.

## Claims

1. Method for determining an adaptive model of an electron distribution in the Earth's atmosphere, which is used in order to correct time-of-flight measurements of signals that are transmitted by earth satellites for position determinations with signal receivers, comprising at least the following steps:
a) determining local electron density data of provision sites,
b) determining a local resolution accuracy as a function of a local density of provision sites,
c) determining localizing basis functions for interpolation of the electron density distribution determined in step a) as a function of the resolution accuracy determined in step b),
d) compiling the model of the electron density distribution with the data determined in step a) and the functions determined in step c);
wherein local electron density data of stationary provision sites and of provision sites that are mobile along a path on the Earth's surface are determined in step a), **characterized in that** the mobile provision sites are arranged in or on motor vehicles and that by means of the adaptive model determined by the method, a constantly changing distribution of the provision sites due to the movement of the motor vehicles is taken into account through a dynamic redistribution of the basis functions.

2. Method according to Claim 1, wherein the provision sites respectively comprise at least one dual-frequency signal receiver.

3. Method according to one of the preceding claims, wherein correction data, which are provided to a multiplicity of GNSS signal receivers, are determined with the model of the electron density distribution.

4. Device for carrying out a method according to one of the preceding claims for determining a model of an electron distribution.

## Revendications

1. Procédé de détermination d'un modèle adaptatif d'une distribution de densité électronique dans l'atmosphère terrestre qui est utilisée pour corriger des mesures de temps de transit de signaux qui sont émis par des satellites à orbite terrestre, destinés à des déterminations de position à l'aide de récepteurs de signaux, présentant au moins les étapes suivantes consistant à :
a) établir des données de densité électronique locales provenant de points de production,
b) déterminer une précision de résolution locale en fonction d'une densité locale de points de production,
c) déterminer des fonctions de bas de localisation pour interpoler la densité électronique établie à l'étape a) en fonction de la précision de résolution déterminée à l'étape b),
d) créer le modèle de la distribution de densité électronique à l'aide des données établies à l'étape a) et des fonctions établies à l'étape c) ;
dans lequel à l'étape a), des données de densité électronique locales sont établis provenant de points de production stationnaires et de points de production pouvant être déplacés le long d'un chemin à la surface de la terre,
**caractérisé en ce que** les points de production pouvant être déplacés sont disposés dans ou sur des véhicules automobiles, et **en ce que** le modèle adaptatif déterminé au moyen du procédé prend en compte par une redistribution dynamique des fonctions de base une distribution des points de production variant constamment en raison du déplacement des véhicules automobiles.

2. Procédé selon la revendication 1, dans lequel les points de production présentent respectivement un récepteur de signaux bifréquence.

3. Procédé selon l'une quelconque des revendications précédentes, dans lequel le modèle de la distribution de densité électronique permet d'établir des données de correction qui sont fournies à une pluralité de récepteurs de signaux GNSS.

4. Dispositif permettant d'exécuter un procédé selon l'une quelconque des revendications précédentes pour déterminer un modèle d'une distribution de densité électronique.
